# EUROPEAN PATENT APPLICATION

(11) **EP 3 944 168 A1**
(43) Date of publication of application: **26.01.2022**
(21) Application number: 21185418.7
(22) Date of filing: 13.07.2021
(51) Int. Cl.: G06Q 10/08

(54) **A SYSTEM FOR MONITORING AND MANAGING COSMETIC PRODUCT DISPENSING DEVICES**

(30) Priority: 20.07.2020 IT 202000017602
(71) Applicant: Delli Carri, Manuela, 71122 Foggia (FG) (IT)
(72) Inventor: Delli Carri, Manuela, 71122 Foggia (FG) (IT)
(74) Representative: Braidotti, Andrea

(57) **Abstract**

System (100) for the monitoring and management of dosing devices for cosmetic products characterized by the fact of comprising a plurality of monitoring modules (101), each module (101) comprising:
- a plurality of cosmetic product dispensers comprising a label for their unique identification or configured to be uniquely identified,
- at least one electronic weighing device (102) configured to detect the weight and/or weight variations of at least one of said metering devices which is intended to be positioned on said electronic weighing device (102),
- at least one device for detecting (103) the presence/positioning or not of each dispenser on the electronic weighing device (102),
- an electronic control and/or processing unit (104) which is electronically connected with said at least one electronic weighing device (102) and with said at least one detection apparatus (103) and which, on the basis of the signals received from said at least one detection apparatus (103) and from said at least one electronic weighing device (102), is configured to associate the corresponding weight or weight variation to each dispenser, and also characterized in that:
- the control and/or processing units (104) of each of said modules (101) are electronically connected with at least one central electronic unit (105) to thus allow data transfer from said control and/or processing units (104) according to at least one central electronic unit (105)
- said at least one central electronic unit (105) is configured to be in wireless communication with a remote unit (106) to thus allow data transfer from said central electronic unit (105) to said remote unit (106).

## Description

The present invention relates to a system for monitoring and managing cosmetic product dispensing devices.

The present invention also relates to a method for monitoring and managing dispensing devices for cosmetic products.

As is known, there are metering devices for cosmetic products, for example nail polish.

For example, patent application DE102012109380 describes a device having a tank for storing a quantity of substance and another tank for storing and dosing another quantity of substance.

The latter tank has a flexible wall to partially vary its capacity and a metering opening corresponding to a filling hole. The latter tank also has a coating unit partially formed from a flexible material, in particular a plastic or soft rubber material. The coating unit comprises a portion of the latter tank and opens into the metering opening.

Another patent, US5042955, describes a distributor for applying nail polish, in particular the nail polish comprises a feeding chamber, a brush and a metering device for adjusting the flow speed and consequently the thickness of the layer. The brush, when not in use, is surrounded by a sponge containing a cleaning liquid, in order to prevent the brush from drying and sticking.

However, these known solutions suffer from the problem of not being computerized and, therefore, the consumption of the products cannot be monitored remotely.

The object of the present invention is to provide a system and a method for monitoring and managing cosmetic product dispensing devices which allow to overcome, at least in part, the drawbacks of traditional solutions.

Another object of the invention is to propose a system and a method for remotely monitoring the consumption and/or the frequency of use of dosing devices for cosmetic products.

Another object of the invention is to propose a system and a method for the remote monitoring of dosing devices for cosmetic products, which can be used with/for any type of dosing device.

Another object of the invention is to propose a system and a method for the remote monitoring of dispensing devices for cosmetic products which are completely automated and which do not require any human intervention.

Another object of the invention is to propose a system and a method for the remote monitoring of dosing devices for cosmetic products which can be implemented in a simple, rapid and low-cost manner.

Another object of the invention is to propose a system and a method for the remote monitoring of dosing devices for cosmetic products which are improvements and/or alternatives to traditional ones.

All these purposes, considered both individually and in any combination thereof, are achieved, according to the invention, with a system for monitoring and managing cosmetic product dosing devices, as defined in claim 1 and/or with a method for the monitoring and management of metering devices for cosmetic products, as defined in claim 12.

The present invention is further clarified hereinafter in a preferred embodiment thereof reported for purely illustrative and non-limiting purposes with reference to the attached drawings in which:
- Figure 1: shows a schematic view of a system, according to the invention, for the monitoring and management of dosing devices for cosmetic products,

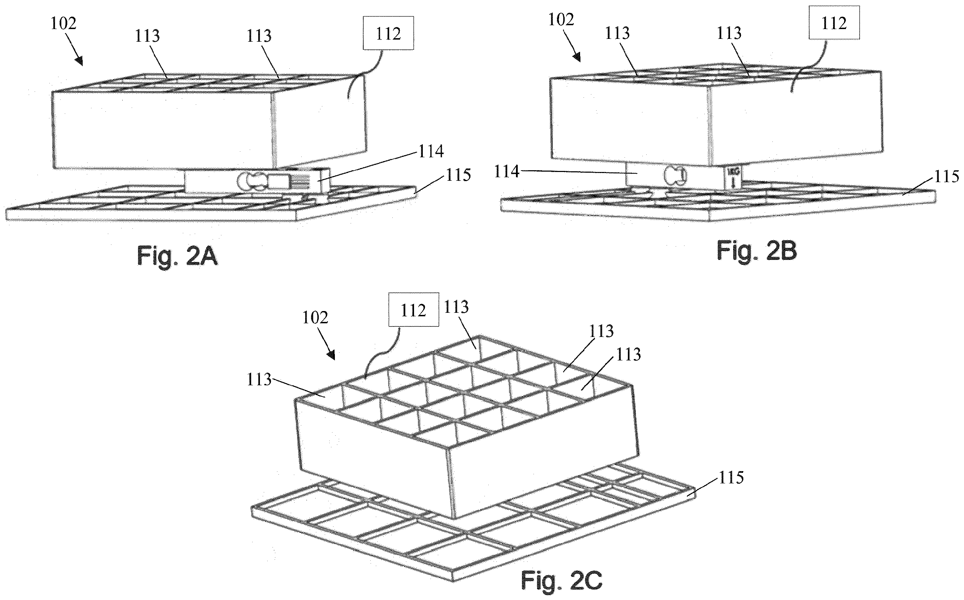

- Figures 2A-2C: show various perspective views of the weighing device provided in the system according to the invention;
- Figure 3: shows a flow chart of a method, according to the invention, for monitoring and managing cosmetic product dosing devices.

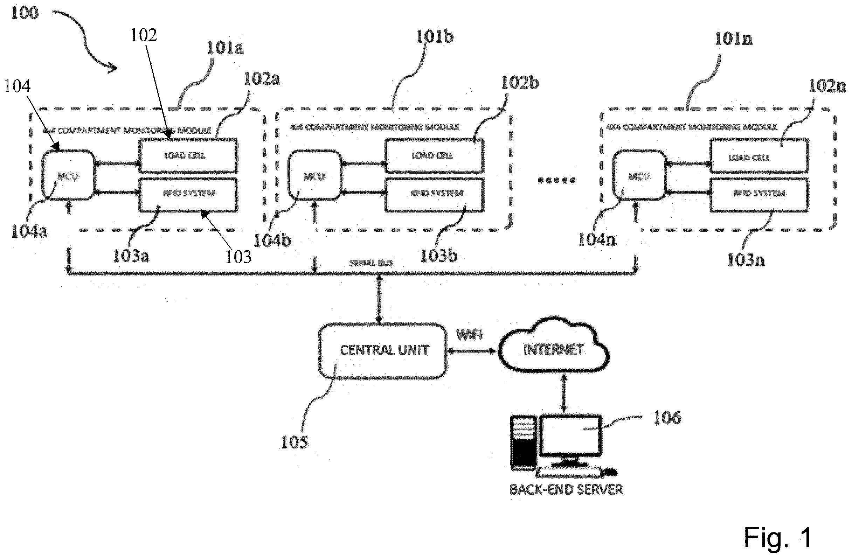

With reference to Figure 1, a system 100 is shown, according to the invention, for monitoring and managing dosing devices for cosmetic products comprising a plurality of monitoring modules 101, hereinafter 101a, 101b... 101n. Preferably, all the monitoring modules 101 of the system 100 are identical to each other.

Appropriately, each monitoring module 101 includes:
- a plurality of cosmetic product dispensers including a label for their unique identification,
- at least one electronic weighing device 102 - preferably comprising a load cell (hereinafter 102a, ... 102n for each module) - which is configured to detect the weight and/or weight variations of at least one dispenser, preferably of a plurality of dispensers (for example of sixteen dispensers), provided for in each module 101,
- at least one detection apparatus 103 (hereinafter 103a ... 103n) which is configured to detect/identify the presence/positioning or not of a certain dispenser on the electronic weighing device 102, and
- a control and/or processing unit, preferably defined by a microcontroller 104 (hereinafter 104a, ... 104n for each module), which is electronically connected with the weighing device 102 and with the detection apparatus 103.

The control and/or processing unit 104 of each module 101 is configured so that, on the basis of the signals received from said detection apparatus 103 and from said at least one electronic weighing device 102, it associates the corresponding weight or weight variation to each dispenser, or each group of dispensers, of that module.

System 100 also includes:
- a central electronic unit 105 which is electronically connected with the control and/or processing units 104 to thus allow data transfer from said control and/or processing units 104 to said central electronic unit 105,
- a remote unit 106 which is electronically connected, in particular is in communication via wireless, with said central electronic unit 105 to thus allow data transfer from said central electronic unit 105 to said remote unit 106.

Conveniently, the central electronic unit 105 is positioned in proximity to or in correspondence with the modules 101 and, preferably, is mechanically associated with/mounted on said module 101. Preferably, a central electronic unit 105 can be provided for all the modules 101 of the system or, in another possible embodiement, a central electronic unit 105 can be provided for each module 101.

Conveniently, all the dispensers managed within the system 100 are uniquely identified. Conveniently, in a possible alternative embodiment, all the dispensers are uniquely identified within the same module 101.

Preferably, the weighing device 102 comprises:
- a base 112 and/or a support and/or containment structure for at least one dispenser to be weighed,
- a load cell 114 configured to detect the weight and/or the weight variation of what is positioned on the base 112 and/or on the support and/or containment structure, and thus detect the weight and/or the weight variation of the dispenser.

Preferably, said base 112 and/or structure comprises a plurality of seats 113, each of which is intended and/or configured to receive and/or house a metering device.

Preferably, the load cell 114 rests at the bottom on a base 115.

Conveniently, the weighing device 102, and in particular its load cell, is electronically connected to the control and/or processing unit 104 to send to the latter a corresponding signal representing the weight and/or the weight variation detected at its base 112 or support structure.

Conveniently, the apparatus 103 for detecting the presence/positioning of a dispenser on the weighing device 102 can comprise optical or, preferably, radiofrequency identification means, in particular by means of RFID technology. In a possible embodiment, the detection apparatus 103 comprises a camera which reads or recognizes an identifier obtained on or associated with the dispenser, or comprises a barcode reader (for example QR-code) to read or thus recognize a corresponding barcode associated with the dispenser.

Preferably, the detection apparatus 103 is configured to use RFID technology. Preferably, the detection apparatus 103 comprises a reading and/or writing apparatus configured to read or recognize an RFID label (tag or transponder) which is mounted/applied on each dispenser. Preferably, the detection apparatus 103 is mechanically mounted associated with the weighing device 102, or vice versa. Conveniently, moreover, the reading and/or writing apparatus of the apparatus 103 is electronically connected to the control and/or processing unit 104.

Conveniently, moreover, as already mentioned, each dispenser is uniquely identified by means of the content of a corresponding label which is applied to the corresponding dispenser. Preferably, each dispenser is provided with an RFID label, preferably passive, which contains and transmits a code which uniquely identifies said label, and therefore the corresponding dispenser.

Conveniently, the detection apparatus 103 is configured to detect whether or not a certain dispenser rests on the base 112 and/or on the support and/or containment structure of the weighing device 102. Conveniently, the detection apparatus 103 is electronically connected to the control and/or processing unit 104 to thus send a corresponding signal representative of the presence and/or absence of the metering device - and preferably of a specific metering device - or also of a group of metering devices, on the base 112 and/or on the support and/or containment structure of the weighing device 102.

Advantageously, the control and/or processing unit 104 is configured to match the signal representing the weight and/or weight variation received by the weighing device 102 to the signal received by the detection apparatus 103 and therefore representative of a specific dispenser, thus obtaining the weight and/or the weight variations of each dispenser that is placed positioned/inserted on the base 112 and/or on the support and/or containment structure of the weighing device 102.

Advantageously, the control and/or processing unit 104 is configured to calculate, on the basis of the number of signals received by the apparatus 103 and relating to a given dispenser, the number of times that this has been withdrawn.

Advantageously, the control and/or processing unit 104 is provided and/or associated with a timer and is also configured to calculate, on the basis of the number of received signals relating to a given dispenser and of the timer data, the withdrawal frequency of a determined dispenser in a certain time interval and/or its withdrawal time (ie the time in which it is not present on the base 112 and/or the support and/or containment structure of the weighing device 102).

In particular, in a possible embodiment, each module 101i, with "i" between 1 and n, comprises:
- a load cell 102a ... 102n for dispensers of cosmetic products, at least one and preferably sixteen;
- an RFID detection system 103a ... 103n acting as a block for detecting the weight variations relating to each dispenser inserted in the appropriate load cell, for example +/-0.5 g, carried out by monitoring the frequency of use of each dispenser which, through an RFID label with unique identification, placed on its casing, it recognizes the dispenser positioned in each load cell and verifies in real time the withdrawal of cosmetic product (for example nail polish) from the dispenser and its repositioning after use in the its housing;
- a microcontroller 104a... 104n for processing the RFID signal coming from each RFID detection system 103a... 103n.

According to an aspect of the invention, all the modules 101 - and in particular the respective control and/or processing units 104 - are electronically connected - via cable or wireless - to a central electronic unit 105. Preferably, the central electronic unit 105 comprises a circuit of the "System-On-Chip" type. Preferably, the control and/or processing units 104 of the modules 101 are connected by cable, in particular by means of a serial bus, to the central electronic unit 105.

Conveniently, a software module is loaded and/or executed in the central electronic unit 105 which is configured to periodically interrogate - automatically, for example at a predetermined frequency, and/or on input from the outside - the control and/or processing units 104 of the various modules 101, to thus acquire the data received and/or processed by the various units 104. In this way, therefore, the central electronic unit 105 acquires the data relating to the dispensers of, or associated with, each module 101.

In particular, the central electronic unit 105 has the task of periodically interrogating each module 101a ... 101n for requesting information relating to the monitoring of the dispensers associated with each module

The central electronic unit 105 is connected via wireless, preferably via the Internet with a remote unit 106. Preferably, the remote unit 106 comprises a back-end server 106. Preferably, the remote unit 106 comprises a back-end server 106 and a database. Preferably, the remote unit 106 comprises a back-end server 106, a database and a front-end application.

Conveniently, the central electronic unit 105 is connected to the Internet and to a Back-End server 106.

Advantageously, this type of hardware architecture makes the system extremely flexible and scalable. In particular, this allows to add a new module through simple plug-and-play operations.

Advantageously, according to an aspect of the invention, the detection apparatus 13 comprises a plurality of readers which are mounted on corresponding seats - each of which configured to receive a single/corresponding dosing device - which are provided/defined on the same weighing device 102. In particular, the apparatus 13 which uses RFID technology detects the weight variations of each dispenser through a single load cell 102a ... 102n in which the dispensers are inserted and the implementation of algorithms suitably developed for the data filtering and error minimization.

Advantageously, according to an aspect of the invention, the RFID identification block of the apparatus 13 carries out the identification with a single reader and a number of antennas optimized according to the application in question. Each antenna is associated with a group of cells/seats provided in the weighing device 102.

Advantageously, according to an aspect of the invention, the management of the communication between the control and/or processing units 104 of the various modules 101 with the Central Unit 105 occurs through a serial bus, and suitably with an application level protocol suitably developed and optimized for the application in question.

Preferably, in the central unit 105 are implemented both a communication module, preferably via cable, with the units 104 of the various modules and a communication module, preferably via wireless, with the remote unit 106. Preferably, the communication between the central unit 105 and remote unit 106 takes place using standard communication protocols typically used in the "Internet of Things" (loT) environment, such as the MQTT protocol.

Advantageously, according to another aspect of the invention, the central unit 105 is provided with a firmware for the implementation of a communication system with the monitoring modules 101a ... 101n, preferably through an optimized protocol, suitably developed, and for the " implementation of the communication system with the back-end server 106 through a WiFi channel, using application protocols used in the loT field (for example MQTT).

Preferably, each module 101 comprises a single weighing device 102 which is provided with a plurality of seats 113, each of which is configured and intended to receive a single/unique metering unit.

Preferably, according to an aspect of the invention, the support base 112 of the weighing device comprises a plurality of seats 113 for corresponding dispensers, for example for sixteen dispensers. Conveniently, for example, the dispensers contained in each weighing device 102, and therefore in each module, are sixteen.

Preferably, each seat 113 of the support base 112 of the weighing device 102 is configured (in terms of size and/or shape) so as to allow the positioning of a single metering unit.

Advantageously, according to another aspect of the invention, a communication channel based on WiFi protocol is established between a central unit 105 and a Back-End server 106.

Advantageously, according to an aspect of the invention, all the modules 101a ... 101n are connected to a central electronic unit 105 based on System-On-Chip technology which will have the task of periodically interrogating each module 101a... 101n to request information relating to the monitoring of the dispensers associated with each module.

Conveniently, the central electronic unit 105 collects all the data coming from the various modules 101a ... 101n and sends them to the back-end server 106.

Advantageously, according to an aspect of the invention, the system 100 is particularly suitable to be used for monitoring and the configuration of nail polish dispensing devices. Preferably, the cosmetic products of the dosing devices can be nail polishers, shampoos, shower gels, perfumes, creams, oils, etc.

The present invention also relates to a method for monitoring and managing dosing devices for cosmetic products by means of a system 100 such as the one described above, in its main characteristics and/or with at least part of its optional and/or advantageous characteristics.

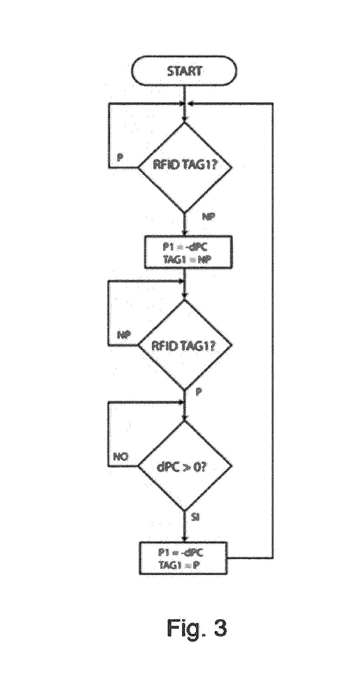

Conveniently, as said and as shown for example in Figure 3, the present invention also relates to a method for monitoring and managing cosmetic product dosing devices inserted in the system 100 and comprising a plurality of modules 101a, 101b ... 101n, each comprising at least one dispenser, and preferably sixteen dispensers, is equipped with an electronic system.

Preferably, the method comprises the following steps:
- the weighing system (102) of each module (101) is set up,
- a plurality of cosmetic product dispensers are positioned on corresponding seats fitted to the weighing device (102) of each module (101),
- the presence or absence of a specific metering device (or groups of metering devices) on the weighing device (102) is identified by means of the detection apparatus (103), thus detecting the withdrawal of each metering device ( or groups of metering units) from said weighing device (102),
- following the repositioning of a specific metering device on the weighing device (102), the new weight and/or the corresponding weight variation of said specific metering device is detected (or of a group of dispensers),
- the new weight and/or the corresponding weight variation of said dispenser is sent to a central unit (105) and/or to a remote unit (106).

Conveniently, the method also provides for detecting, through the detection apparatus 103, the frequency of use of each dispenser and/or its repositioning on the weighing device 102 after use.

In particular, the method includes the steps of:
- providing a plurality of load cells;
- inserting a plurality of cosmetic product dispensers in each load cell;
- detect the weight variations related to each dispenser by detecting the frequency of use of each dispenser through an RFID signal, recognizing the position of the dispenser and verifying in real time the withdrawal of the cosmetic product from the dispenser and its repositioning after use;
- process each RFID signal;
- collecting all the RFID signals coming from all the load cells to obtain information related to the movements of the dispensers and to the variations in total weight, to thus determine the weight variations associated with each dispenser;
- send the related information to a Back-End server.

Preferably, more particularly, the method comprises the step of updating an initial weight P0 as a function of the total weight measured by the weighing device 102, and in particular by the load cell.

Preferably, the method provides, for each dispenser, to define, on the basis of what is transmitted by said detection apparatus 103, two mutually alternative states - ie a first state (P = present) or a second state (NP = not present) - representative respectively of the fact that the corresponding dispenser is positioned or is not positioned on the weighing device 102, preferably in such a way as to allow the detection of its label by the reader of the apparatus 103.

Conveniently, the method provides that, when a certain dispenser is withdrawn, and therefore the state associated with this passes from the first state P to the second state NP (and this is detected by the reader of the apparatus 103 which reads the label associated with that dispenser), then it is detected by the weighing device 102, and eventually a weight and/or weight variation is then calculated which is thus associated with that metering unit. Preferably, a weight variation dPC is detected by the weighing device 102 and a weight P1 corresponding to the weight variation dPC thus detected is associated to that metering unit.

Conveniently, the method provides that - when a certain dispenser, which had been previously withdrawn, is then repositioned on the weighing system 102 so that the state associated with it passes from the second state NP to the first state P (and this is detected by the reader of the apparatus 103 which reads the label associated with that dispenser) - then a weight and/or a variation in weight is measured and, if necessary, is successively calculated, by means of the weighing device 102 which is thus associated with that dispenser. Preferably, a corresponding weight variation dP1 is detected by the weighing system 102 to thus calculate the weight variation dPT1 of that dispenser and also to update the weight of that dispenser (P1_{new} = P1 - dPT1).

More in detail, preferably, the method comprises the steps of:
- define, for each dispenser, two states: Present (P), Not present (NP) depending on whether or not the RFID system detects the tag associated with the dispenser;
- if P1 is the weight of the dispenser1 at time t and PC is the total weight of the module detected by the load cell, this remains P1 as long as it remains in state P, and at a certain instant the dispenser is withdrawn and its status passes from P to NP, detect the weight variation of the load cell which will be equivalent to the weight of the dispenser: P1 = - dPC, where dPC represents the weight variation detected by the load cell;
- when the dispenser is repositioned and its status changes from NP to P, wait for the first detection of the positive sign dPT1 of the load cell (the weight increases due to repositioning of the tube) and calculate the weight variation of the dispenser dP1 = - dPT1 and update the weight of the dispenser 1: P1 = P1-dP1.

Preferably, according to an aspect of the invention, between a first withdrawal of a dispenser and a subsequent/further withdrawal it is appropriate that a time ranging between 0.5 seconds and 5 seconds elapse.

Preferably, the method works on weight variations, for which no preliminary calibration operations are necessary.

Preferably, the method works in the hypothesis of not moving (removing or placing in the cell) 2 dispensers at the same time. Advantageously, for this purpose, each positioning seat 113 defined/provided on the weighing device 102 is configured in such a way as to be able to receive only one dispenser at a time.

Advantageously, the system and method for monitoring and managing cosmetic product dosing devices according to the invention thus allow the consumption of cosmetic product to be monitored.

Another advantage of the system and of the method for monitoring and managing dosing devices for cosmetic products according to the invention consists in the fact of monitoring, on the basis of the data received by the detection apparatus 103 and, preferably, associating them with corresponding data time (for example of a timer), the time and/or frequency of use of each dispenser.

Conveniently, the data of the various modules 101, which are then sent from the central unit 105 to the remote unit 106, can be further processed - possibly also for statistical purposes - in order to extract useful information. Advantageously, the system for monitoring and managing dosing devices for cosmetic products according to the invention allows to know the number of residual treatments, which is the most used product, etc. Furthermore, the system and method for monitoring and managing cosmetic product dosing devices according to the invention allows to avoid the warehouse and allows to reorder products through an appropriate App, loaded and executed on a client device (for example on a mobile device, such as a smartphone, or on a PC) that can be suitably configured to interface with the data stored and/or processed in the remote unit 106.

Finally, the system and method for monitoring and managing dosing devices of cosmetic products according to the invention is highly automated, economical to implement and simple to use.

## Claims

1. System (100) for the monitoring and management of dosing devices for cosmetic products **characterized by** the fact of comprising a plurality of monitoring modules (101), each module (101) comprising:
- a plurality of cosmetic product dispensers comprising a label for their unique identification or configured to be uniquely identified,
- at least one electronic weighing device (102) configured to detect the weight and/or weight variations of at least one of said metering devices which is intended to be positioned on said electronic weighing device (102),
- at least one device for detecting (103) the presence/positioning or not of each dispenser on the electronic weighing device (102),
- an electronic control and/or processing unit (104) which is electronically connected with said at least one electronic weighing device (102) and with said at least one detection apparatus (103) and which, on the basis of the signals received from said at least one detection apparatus (103) and from said at least one electronic weighing device (102), is configured to associate the corresponding weight or weight variation to each dispenser, and also **characterized in that**:
- the control and/or processing units (104) of each of said modules (101) are electronically connected with at least one central electronic unit (105) to thus allow data transfer from said control and/or processing units (104) according to at least one central electronic unit (105)
- said at least one central electronic unit (105) is configured to be in wireless communication with a remote unit (106) to thus allow data transfer from said central electronic unit (105) to said remote unit (106).

2. System according to claim 1, **characterized in that** the weighing device (102) of each module (101) comprises:
- a base (112) and/or support and/or containment structure for at least one dispenser to be weighed,
- a load cell (114) configured to detect the weight variation of what is positioned on the base (112) and/or support and/or containment structure, and thus detect/calculate the weight and/or the weight variation of a corresponding dispenser.

3. System according to the preceding claim, **characterized in that** said base (112) and/or support and/or containment structure comprises a plurality of seats (113), each of which is intended and/or configured to receive and/or house a dispenser.

4. System according to one or more of the preceding claims, **characterized in that** each module (101) comprises a single weighing device (102) which is provided with a plurality of seats (113), each of which is configured and intended to receive a single/single dispenser.

5. System according to one or more of the preceding claims, **characterized in that**:
- the label of said dispensers is an RFID type label, and
- said detection apparatus (103) is configured to use RFID technology and comprises at least one reader which is configured to read the content of said RFID tags, each of which is associated/applied on a dispenser.

6. System according to one or more of the preceding claims, **characterized in that** the detection apparatus (103) is electronically connected to the control and/or processing unit (104) so to send a corresponding signal representative of the presence and/or the absence of a specific dispenser on a base (112) and/or support structure and/or containment of the weighing device (102).

7. System according to one or more of the preceding claims, **characterized in that** the control and/or processing unit (104) is configured to calculate, on the basis of the number of received signals relating to a given metering unit, the number of times this was picked up.

8. System according to one or more of the preceding claims, **characterized in that** the control and/or processing unit (104) is provided and/or associated with a timer and is also configured to calculate, based on the number of received signals relating to a specific dispenser and timer data, the withdrawal frequency of a given dispenser in a certain time interval and/or its withdrawal time.

9. A system according to one or more of the preceding claims, **characterized in that** the central electronic unit (105) comprises a circuit of the type "System-On-Chip."

10. System according to one or more of the preceding claims, **characterized in that** the central electronic unit (105) comprises a software module for communication with the control and/or processing unit (104) of said plurality of modules (101) and also a software module for communication via wireless, preferably via the Internet network with a protocol used in the "Internet of Things" environment, with the remote unit (106).

11. A system according to one or more of the preceding claims, **characterized by** the fact that central electronic unit (105) is loaded and/or executed a software module that is configured to interrogate periodically, preferably automatically, the control and/or processing unit (104) of the various modules (101), to thus acquire the data received and/or processed by the various units (104).

12. A method for the monitoring and management of devices dispensers of cosmetic products, **characterized by** the fact that it uses a system (100) according to one or more of the preceding claims.

13. Method according to the preceding claim, **characterized in that** it comprises the following steps:
- the weighing system (102) of each module (101) is set up,
- a plurality of cosmetic product dispensers are positioned on corresponding seats provided with the weighing device (102) of each module (101),
- the presence of a certain dispenser on the weighing device (102) is identified by means of the detection apparatus (103), and therefore the withdrawal from said weighing device (102),
- following the repositioning of a specific dispenser on the weighing device (102), the new weight and/or the corresponding weight variation of said specific dispenser is detected,
- the new weight and/or the corresponding weight variation of said dispenser is sent to a central unit (105) and/or to a remote unit (106).

14. Method according to one or more of the preceding claims, **characterized by** the fact that, on the basis of data from said detection apparatus (103), it detects the frequency and/or duration of use, and then sampling, each dispenser taken from said weighing device (102).

15. Method according to the preceding claims, **characterized in that**:
- on the basis of what is transmitted by said detection apparatus (103), two mutually alternative states are defined, i.e. a first state P and a second state NP, respectively representative of the fact that the corresponding dispenser is positioned or is not positioned on the device weighing unit (102) so as to allow the detection of its label by the reader of the detection apparatus (103),
- when a given metering device is withdrawn, the detection apparatus (103) detects this condition and therefore the state associated with said determined metering device passes from the first state P to the second state NP, and is detected by means of the weighing device (102), and eventually, a weight and/or weight variation is then calculated, which is thus associated with that particular dispenser,
- when a certain dispenser, which had previously been withdrawn, is then repositioned on the weighing system (102) so as to be detected by the detection apparatus (103), the state associated with said determined dispenser passes from the second state NP to the first state P and a weight and/or a change in weight is detected by means of the weighing device (102), and eventually calculated, which is thus associated with that particular dispenser.
